# EUROPEAN PATENT SPECIFICATION

(11) **EP 1 519 161 B1**
(45) Date of publication and mention of the grant of the patent: **08.11.2006**
(21) Application number: 04104387.8
(22) Date of filing: 10.09.2004
(51) Int. Cl.: G01F 23/60, G01F 23/30, G01F 25/00

(54) **Liquid level sensor for motor vehicles**
Flüssigkeitspegelsensor für Kraftfahrzeuge
Détecteur de niveau de liquide pour véhicules à moteur

(30) Priority: 12.09.2003 IT TO20030697
(43) Date of publication of application: 30.03.2005
(73) Proprietor: FIAT AUTO S.p.A., 10135 Torino (IT)
(72) Inventor: Donadio Vincenzo, 10151, Torino (IT)
(74) Representative: Jorio, Paolo

(56) References cited:
- US-A- 1 202 757
- US-A- 2 989 602
- US-A- 3 211 856
- US-A1- 2003 029 223

## Description

The present invention relates to a level sensor for vehicles, in particular motor vehicles.

In the motor vehicle sector, in order to detect the quantity of operating liquid, such as, for example, oil or water, inside a tank and indicate in due time the need to top up said liquid in the event of shortage, different types of sensors are used. Some of these sensors - mainly those which are commonly referred to as being of the "reed" type - have the major drawback that they are sensitive to any electromagnet fields present in the engine compartment and may not be particularly reliable due to the fact that the contacts may stick together. Other sensors, for example of the "washer" type, where a metal washer closes the contacts when there is a variation in the level, are not very reliable in particular in the case where the liquid is subject to shaking, for example following sudden acceleration and/or deceleration of the vehicle. In these cases, the known sensors generate signals indicating that there is no liquid even when there is still a sufficient quantity of said liquid, resulting in unnecessary and unjustified alarm signals and requests for technical assistance. Owing to the sensitivity of the known sensors to shaking, it is required to use signalling circuits in association with the said sensors, which must be necessarily of the normally open type.

The object of the present invention is that of providing a level sensor which enables the abovementioned problems to be solved and which, at the same time, is simple and inexpensive to manufacture and very reliable.

Accordingly the present invention provides a level sensor for vehicles, in particular motor vehicles, able to be housed at least partially inside a tank in order to detect the level of the operating liquid contained in this tank, said sensor comprising an external casing; a rod coupled with the casing so as to slide in both senses in a detecting direction and carrying a floating body connected thereto; first electric contacts for the maximum level and second electric contacts for the minimum level, which are mounted on the casing and arranged spaced from each other in a direction parallel to the said detecting direction, and movable contact means able to co-operate selectively with the said first electric contacts and second electric contacts, characterized in that the said movable contact means comprise a resiliently deformable element mounted on the said rod.

Preferably, in the sensor defined above, the resiliently deformable element comprises at least one first resiliently yielding terminal portion able to co-operate with the said first electric contacts for the maximum level; the said resiliently deformable element being integrally connected to the said rod in a position such that the said first terminal portion is resiliently deformed against the said first electric contacts when the level of the liquid inside the tank is at a maximum. Conveniently, the terminal portion comprises a wire element.

The invention will now be described with reference to the accompanying figures which illustrate a non-limiting example of embodiment thereof and in which:
Figure 1 shows a schematic and cross-sectional view of a tank for liquids which is provided with a liquid level sensor designed in accordance with the notions of the present invention;
Figure 2 shows a cross-sectional and enlarged view of a detail from Figure 1; and
Figure 3 shows a plan view of a detail from Figure 2.

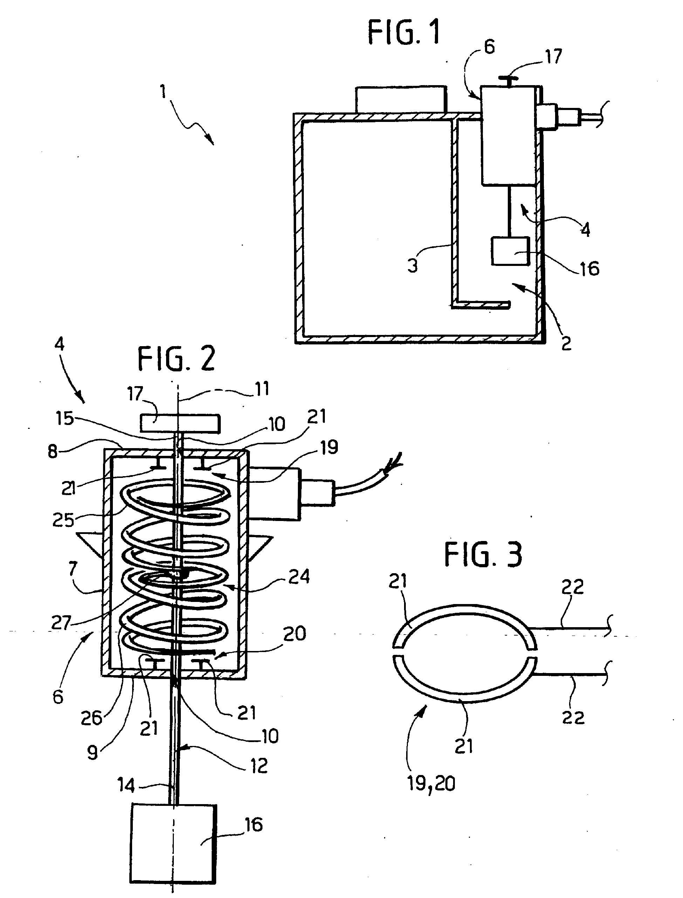

In Figure 1, 1 denotes in its entirety a tank for an operating liquid, for example oil or water. A level sensor 4 with a movable rod connected electrically, by means of a cable 5, to an external signalling circuit, which is known per se and not described in detail, is partially housed inside an open lateral cavity 2 of the tank 1 delimited by a partition 3.

The sensor 4 comprises a substantially cylindrical external casing 6 with a side wall 7 coupled, conveniently by means of snap-engagement, with a wall of the tank 1, and two end walls 8 and 9 provided with respective through-openings 10 coaxial with a common axis 11. The sensor 4 comprises, moreover, a rod 12 which extends coaxially with respect to the axis 11, passes through the casing 6 engaging with the openings 10 in a sliding manner and has two opposite terminal sections - denoted by 14 and 15 - which project outside the casing 6 and respectively carry, integrally connected thereto, a floating body 16 and a pushbutton 17 for manually testing the signalling circuit. First electric contacts 19 for the maximum level and second electric contacts 20 for the minimum level are integrally connected to the internal surfaces of the end walls 8 and 9, respectively, in a position coaxial with the axis 11 and surrounding the respective openings 10. In accordance with that shown in particular in Figure 3, each of the fixed contacts 19, 20 comprises a pair of associated half-rings 21 arranged coaxially and perpendicularly with respect to the axis 11, being electrically insulated from each other and each connected to the signalling circuit by means of a respective electric cable 22.

The casing 6 has arranged internally, between the contacts 19 and 20, a movable contact element which is resiliently deformable and movable together with the rod 12 so as to co-operate selectively in bearing contact with the first electric contacts 19 and second electric contacts 20. In the particular example described, the movable contact element is formed by a helical wire spring 24 which is wound around the rod 12 and has a length measured along the said rod 12 which is less than the distance between the contacts 19 and 20. In the specific case, the spring 24 comprises two terminal portions 25 and 26 which are resiliently deformable and a middle portion 27 which is integrally connected to a middle portion of the rod 12. The middle portion of the rod 12 to which the middle portion 27 of the spring 24 is connected is chosen so that the terminal portion 25 is compressed and therefore resiliently deformed against the first contacts 19 when the level of the liquid inside the tank 1 is at a maximum. Conveniently, the connection is performed so that, in maximum level conditions, the turns of the terminal portion 25 of the spring 24 which are resiliently deformed are variable in number from two to four. Preferably the spring 24 is made of copper and/or brass wire with a diameter varying between 0.3 and 0.4 millimetres.

Under operating conditions, when the level of the liquid inside the tank reaches the maximum value, the rod 12 is displaced fully upwards and the terminal portion 25 of the spring 24 compressed against the first contacts 19, thus making detection of this condition possible. As soon as the liquid inside the tank 1 tends to diminish, the rod 12 moves gradually downwards. During a first part of the movement of the rod, the end portion 25 of the spring continues to make bearing contact against the first contacts 19 as a result of initial forcing thereof, after which, following a further reduction, the portion moves gradually until it comes into bearing contact against the second contacts 20, generating a minimum level signal.

From that stated above it is obvious that the use of a simple spring as the movable contact allows the production, on the one hand, of level sensors at very low costs and, on the other hand, of sensors which are extremely efficient and reliable. In the specific case, the use of a simple spring allows the production of sensors which are not sensitive to the magnetic fields of the engine and in which there are no problems arising from sticking of the contacts, but in particular sensors which do not result in unnecessary and unjustified alarm signals or the request for unnecessary maintenance following shaking of the liquid contained inside the tank. In fact, since the spring for most of the travel movement of the rod is permanently forced against the first contacts 19, even following a sudden variation in the level, the spring extends, but still makes bearing contact against the first contacts 19, thus avoiding the emission of luminous or acoustic signals indicating an insufficient level of liquid. In other words, owing to the use of a resiliently deformable component and the resilient deformation thereof against the maximum level contacts, it is ensured that the level signalling circuit is unaffected by fluctuations in the liquid level and that a signal indicating shortage of liquid is emitted only when the quantity of liquid inside the tank is actually low or close to the low level.

Finally, owing to the presence of a movable contact forced resiliently against the fixed maximum level contacts, it is possible to use equally well normally closed or normally open electric circuits.

## Claims

1. Level sensor (4) for vehicles, in particular motor vehicles, able to be housed at least partially inside a tank (1) in order to detect the level of the operating liquid contained in said tank (1), the sensor (4) comprising an external casing (6); a rod (12) coupled with the casing (6) so as to slide in both senses in a detecting direction (11) and carrying a floating body (16) connected thereto; first electric contacts (19) for the maximum level and second electric contacts (20) for the minimum level, which are mounted on the casing (6) and arranged spaced from each other in a direction parallel to the said detecting direction (11), and movable contact means (24) able to co-operate selectively with the said first electric contacts (19) and second electric contacts (20), **characterized in that** the said movable contact means comprise a resiliently deformable element (24) mounted on the said rod (12).

2. Sensor according to Claim 1, **characterized in that** the said resiliently deformable element comprises at least one first resiliently yielding terminal portion (25) able to co-operate with the said first electric contacts (19) for the maximum level, the said resiliently deformable element being integrally connected to the said rod (12) in a position such that the said first terminal portion (25) is resiliently deformed against the said first electric contacts (19) when the level of the liquid inside the tank is at a maximum.

3. Sensor according to Claim 2, **characterized in that** the said terminal portion (25) comprises a wire element.

4. Sensor according to Claim 3, **characterized in that** the said wire element is wound around the said rod (12) along a helical path.

5. Sensor according to Claim 4, **characterized in that**, in maximum level conditions, at least two turns of the said wire element are resiliently deformed.

6. Sensor according to any one of the preceding claims, **characterized in that** the said resiliently deformable element consists of a helical spring (24) wound around the said rod (12), a middle portion (27) of the said spring (24) being fixed on the said rod (12).

7. Sensor according to any one of the preceding claims, **characterized in that** it comprises manual operating means for checking functioning of the level signalling system, the said operating means comprising an actuating member (17) integrally connected to one end of the rod (12) opposite to the said floating body (16) and projecting outside the casing (6).

## Patentansprüche

1. Pegelsensor (4) für Fahrzeuge, insbesondere Motorfahrzeuge, der mindestens teilweise innerhalb eines Tanks (1) aufgenommen werden kann, um den Pegel der in dem Tank (1) enthaltenen Betriebsflüssigkeit zu detektieren, wobei der Sensor (4) umfasst: ein Außengehäuse (6); eine Stange (12), welche mit dem Gehäuse (6) so gekoppelt ist, dass sie beidsinnig in einer Detektierrichtung (11) gleitbeweglich ist, und welche einen mit ihr verbundenen Schwimmerkörper (16) trägt; erste elektrische Kontakte (19) für den Maximumpegel und zweite elektrische Kontakte (20) für den Minimumpegel, welche an dem Gehäuse (6) montiert und mit Abstand voneinander in einer Richtung parallel zu der Detektierrichtung (11) angeordnet sind, und bewegliche Kontaktmittel (24), welche selektiv mit den ersten elektrischen Kontakten (19) und den zweiten elektrischen Kontakten (20) zusammenwirken können, **dadurch gekennzeichnet, dass** die beweglichen Kontaktmittel ein elastisch verformbares Element (24) umfassen, welches an der Stange (12) montiert ist.

2. Sensor nach Anspruch 1, **dadurch gekennzeichnet, dass** das elastisch verformbare Element mindestens einen ersten elastisch nachgiebigen Endbereich (25) umfasst, der mit den ersten elektrischen Kontakten (19) für den Maximumpegel zusammenwirken kann, wobei das elastisch verformbare Element in einer derartigen Position mit der Stange (12) integral verbunden ist, dass der erste Endbereich (25) gegen die ersten elektrischen Kontakte (19) elastisch verformt wird, wenn der Pegel der Flüssigkeit innerhalb des Tanks ein Maximum hat.

3. Sensor nach Anspruch 2, **dadurch gekennzeichnet, dass** der Endbereich (25) ein Drahtelement umfasst.

4. Sensor nach Anspruch 3, **dadurch gekennzeichnet, dass** das Drahtelement entlang eines gewundenen Pfades um die Stange (12) gewickelt ist.

5. Sensor nach Anspruch 4, **dadurch gekennzeichnet, dass** bei Maximumpegelbedingungen mindestens zwei Windungen des Drahtelementes elastisch verformt sind.

6. Sensor nach einem der voranstehenden Ansprüche, **dadurch gekennzeichnet, dass** das elastisch verformbare Element aus einer gewundenen Feder (24) besteht, die um die Stange (12) gewickelt ist, wobei ein mittlerer Bereich (27) der Feder (24) an der Stange (12) fixiert ist.

7. Sensor nach einem der voranstehenden Ansprüche, **dadurch gekennzeichnet, dass** er manuelle Betätigungsmittel zum Prüfen der Funktion des Pegelsignalsystems umfasst, wobei die Betätigungsmittel ein Betätigungsglied (17) umfassen, welches mit einem Ende der Stange (12), das dem Schwimmerkörper (16) gegenüberliegt und aus dem Gehäuse (6) herausragt, integral verbunden ist.

## Revendications

1. Capteur de niveau (4) pour véhicules, en particulier pour véhicules à moteur, pouvant être logé au moins partiellement à l'intérieur d'un réservoir (1) afin de détecter le niveau du liquide de fonctionnement contenu dans ledit réservoir (1), le capteur (4) comprenant un boîtier externe (6) ; une tige (12) couplée au boîtier (6) de manière à coulisser dans les deux sens dans une direction de détection (11) et supportant un corps flottant (16) relié à celle-ci ; des premiers contacts électriques (19) pour le niveau maximum et des seconds contacts électriques (20) pour le niveau minimum, qui sont montés sur le boîtier (6) et agencés de manière espacée les uns des autres dans une direction parallèle à ladite direction de détection (11), ainsi que des moyens de contact mobiles (24) pouvant coopérer sélectivement avec lesdits premiers contacts électriques (19) et lesdits seconds contacts électriques (20), **caractérisé en ce que** lesdits moyens de contact mobiles comprennent un élément déformable de manière élastique (24) montés sur ladite tige (12).

2. Capteur selon la revendication 1, **caractérisé en ce que** ledit élément déformable de manière élastique comprend au moins une première partie terminale déformable de manière élastique (25) pouvant coopérer avec lesdits premiers contacts électriques (19) pour le niveau maximum, ledit élément déformable de manière élastique étant relié de manière solidaire à ladite tige (12) dans une position telle que ladite première partie terminale (25) est déformée de manière élastique contre lesdits premiers contacts électriques (19) lorsque le niveau du liquide à l'intérieur du réservoir est à un maximum.

3. Capteur selon la revendication 2, **caractérisé en ce que** ladite partie terminale (25) comprend un élément en fil métallique.

4. Capteur selon la revendication 3, **caractérisé en ce que** ledit élément en fil métallique est enroulé autour de ladite tige (12) le long d'un trajet hélicoïdal.

5. Capteur selon la revendication 4, **caractérisé en ce que**, dans des conditions de niveau maximum, au moins deux tours dudit élément en fil métallique sont déformés de manière élastique.

6. Capteur selon l'une quelconque des revendications précédentes, **caractérisé en ce que** ledit élément déformable de manière élastique consiste en un ressort hélicoïdal (24) enroulé autour de ladite tige (12), une partie centrale (27) dudit ressort (24) étant fixée sur ladite tige (12).

7. Capteur selon l'une quelconque des revendications précédentes, **caractérisé en ce qu'**il comprend des moyens d'actionnement manuel pour vérifier le fonctionnement du système d'indication de niveau, lesdits moyens d'actionnement comprenant un élément d'actionnement (17) solidaire d'une extrémité de la tige (12) à l'opposé dudit corps flottant (16) et faisant saillie à l'extérieur du boîtier (6).
